# EUROPEAN PATENT SPECIFICATION

(11) **EP 4 563 342 B1**
(45) Date of publication and mention of the grant of the patent: **15.10.2025**
(21) Application number: 23220357.0
(22) Date of filing: 27.12.2023
(51) Int. Cl.: B32B 27/08, B32B 27/12, B32B 27/40, C08L 75/04, C09D 175/04

(54) **SHEET CONTAINING POLYURETHANE LAYERS, PREPARATION METHOD AND USE**
FOLIE ENTHALTEND POLYURETHANSCHICHTEN, VERFAHREN ZU IHRER HERSTELLUNG UND IHRE VERWENDUNG
FEUILLE CONTENANT DES COUCHES DE POLYURÉTHANE, PROCÉDÉ DE PRÉPARATION ET UTILISATION

(30) Priority: 28.11.2023 PT 2023119079
(43) Date of publication of application: 04.06.2025
(73) Proprietor: TMG - Tecidos Plastificados e Outros Revestimentos para a Indústria Automóvel, S.A., 4770-583 São Cosme do Vale (PT)
(72) Inventor: FERREIRA DA MOTA, João Nuno, 4770-583 SÃO COSME DO VALE (PT); SILVA MAGALHÃES, Maria Julieta, 4770-583 SÃO COSME DO VALE (PT); DA SILVA MAIA, Ivone Marisa, 4770-583 SÃO COSME DO VALE (PT); MACIEL FERREIRA, Pedro Diogo, 4770-583 SÃO COSME DO VALE (PT); DA SILVA MARQUES, Sara Patricia, 4770-583 SÃO COSME DO VALE (PT); DA SILVA RIBEIRO, Filipe Miguel, 4770-583 SÃO COSME DO VALE (PT); PEREIRA DA COSTA AGUILAR RIBEIRO, Helena Isabel, 4770-583 SÃO COSME DO VALE (PT)
(74) Representative: Strehl & Partner mbB

(56) References cited:
- WO-A1-2023/217899
- US-A1- 2022 040 946
- US-A1- 2022 154 038
- US-A1- 2023 114 773

## Description

### Field of the invention

The present invention relates to a sheet comprising a support layer, an intermediate layer containing polyurethane having a high gel content, and a cover layer containing polyurethane having a very low gel content, a method of preparing the sheet, and the use of the sheet as a surface material such as an artificial leather in a vehicle.

### Background art

EP 3 533 601 A1 discloses a composite structure comprising a low-density foam layer, a textile layer, and a thermoplastic cover layer comprising polyolefin or polyvinylchloride (PVC) and optionally comprising thermoplastic elastomers. The composite structure shows good tearing properties and haptics and is improved in terms of wrinkle formation and handling during processing, especially during sewing.

EP 1 927 466 A1 discloses a flexible composite structure comprising a support layer such as a textile layer, one or more polyurethane layers, and a lacquer layer.

US 2022/154038 A1 discloses a sheet comprising a textile support layer, an intermediate layer containing foamed polyurethane, and a cover layer containing thermoplastic polyurethane, wherein the support layer and the intermediate layer only partly interpenetrate each other in their thickness direction to form a compound structure.

### Problem to be solved by the invention

The problem underlying the present invention was to combine the properties of thinness and good appearance with the properties of softness and flexibility to achieve good haptics and handling during a cut and sew process and press lamination/thermal edge wrapping.

### Summary of the invention

The problem underlying the present invention was solved by providing the sheet according to the present invention.

The present invention is defined in the appended claims.

### Advantages of the invention

The sheet according to the invention is thin and soft and exhibits a low wrinkle formation when bent. These properties make the sheet easy to handle and allow easy needle penetration for cut and sew applications.

The intermediate layer is thin enough and interpenetrates the support layer to a low extent to keep the sheet flexible, yet thick enough to keep the support layer invisible from the A-side of the sheet.

The sheet is improved in terms of wrinkle formation and handling in a cut and sew process and a wrapping process due to the compact material construction. The sheet is furthermore improved in terms of textile backing indentation on the A-surface of the material due to the presence of the intermediate layer acting as a barrier to TPU penetration in the textile support.

The sheet is close to a monomaterial since both the intermediate layer and the cover layer contain polyurethane (PU).

The method of preparing the sheet may combine two coating technologies, i.e., indirect transfer coating and extrusion, to achieve the desired physical properties rendering the sheet suitable for cut&sew and edge wrapping.

The sheet is improved in terms of flexibility and elongation and thus, the sheet shows advantageous haptics and complies with specifications for seat applications (flexing endurance) and fits the requirements for edge wrapping of trim parts (bending stiffness).

The combined use of a textile support layer and thin upper layers renders the sheet more lightweight than prior art sheets.

The sheet can be advantageously used either as a trim material in the interior of a vehicle and as material for seat covers, depending on the sheet embodiment.

### Embodiments of the invention

The sheet of the present invention may consist of or contain the support layer, the intermediate layer, and the cover layer described herein. The support layer is arranged at the B-side and the cover layer is arranged at the A-side of the sheet. Herein, the terms "A-side" and "B-side" either refer to the sheet as a whole or to an individual layer, and the terms "above" and "below" the sheet or a layer denote a position at the A-side and the B-side, respectively, of the sheet or layer. The support layer and the intermediate layer interpenetrate each other and are thus directly bonded to each other. The other layers contained in the sheet are layered on each other either directly, e.g., the A-side of the intermediate layer contacts the B-side of the cover layer without any material such as an adhesive disposed between them, or indirectly, i.e., having layer(s) or an adhesive disposed between them. The cover layer may optionally be coated with a lacquer layer. The sheet is a layer structure itself. Additional layers or structures may be arranged at the B-side of the support layer.

Herein, the terms "the sheet", "the support layer", "the intermediate layer", and "the cover layer" refer to "the sheet according to the present invention", "the support layer contained in the sheet according to the present invention", "the intermediate layer contained in the sheet according to the present invention", and "the cover layer contained in the sheet of the present invention", respectively, unless explicitly stated otherwise.

The support layer is directly bonded to the intermediate layer. The layers may interpenetrate each other since the support layer contains voids. The interpenetrated structure is herein referred to as a compound structure. The compound structure consists of a part of the support layer and a part of the intermediate layer in their thickness direction. In each case, the term "a part" means that the respective layer is not included in the compound structure over the whole thickness direction of the respective layer. In other words, a full interpenetration is excluded, and both the intermediate layer and the support layer have a non-interpenetrated layer part in the thickness direction. As a result, the support layer is not exposed at the A-side of the intermediate layer surface, and the intermediate layer is not exposed at the B-side of the support layer surface. In a preferred embodiment, the nonexposed A-side of the intermediate layer is thick enough and/or contains pigments to render the support layer invisible from the A-side of the sheet. Thus, invisibility of the support layer may be achieved even if the cover layer has high light transmittance. Herein, invisible means that the structure cannot be seen by a user when looking at the A-side of the sheet in daylight and absence of B-side backlight. At the same time, the thickness of the intermediate layer and/or the pigment concentration may be adjusted to allow a hidden-until-lit property described below.

The cover layer may contain a structural element at its B-side, i.e., between the cover layer and the intermediate layer. In that case, the cover layer is preferably bonded to the intermediate layer by using an adhesive. The structural element may have optical properties. The structural element may be an opaque or colored pattern that forms a graphic design, image, or logo to serve decorative or indicative purposes. For instance, the structural element may be a very thin printed structure visible through the cover layer. Examples for applying the pattern are inkjet printing, screen printing, laser printing, or laser etching.

Preferably, the sheet is suitable for preparing a sewn product obtainable by sewing at least two sheets or two parts of the same sheet. The sewn product may be prepared by folding the sheet, placing two A-side parts or B-side parts of the sheet together and sewing the two parts of the sheet in the contact area. In order for the sheet according to the invention to have the desired properties, e.g. easy processability when sewing, the sheet must not be too hard. For suitability for sewing, it is also important that the sheet has a suitable stitch tearout force. This is preferably at least 40 N according to DIN EN ISO 23910. In one embodiment, the sheet is both suitable as a tearable coating for an airbag cover without a material weakening and suitable for preparing a sewn product obtainable by sewing at least two layers of the sheet. The sheet is flexible and preferably shows no damages and changes after 500,000 flexing cycles, more preferably after 1,000,001 flexing cycles in a test according to DIN 53 351.

The sheet may be opaque or translucent. Generally, a translucent structure allows the transmittance of more visible light than an opaque structure when light is emitted from the same light source and hits the structures. Herein, the meaning of the term "translucency" covers the meaning of "transparency". In general, transparency is the physical property of allowing light to pass through the material without being scattered. Translucency is a superset of transparency and allows light to pass through and allows scattering. In other words, a translucent medium allows the transport of light while a transparent medium not only allows the transport of light but allows for image formation. Transparent materials appear clear. Since the value of the light transmittance is affected by absorption, scattering, reflection and the like, the exact light transmittance values of the different components of the sheet may vary depending on the type of light source, the composition and thickness of the various layers. The light transmittance also differs for different wavelength ranges. The light transmittance of the layer structures described in the present application, i.e., the individual layers or any of the composite structures, respectively, is determined as follows: Equipment: Datacolor, model 850; Lamp: Xenon. The total transmittance is measured according to the user's guide provided by the manufacturer. A white plaque (e.g. Spectralon^{®} plaque) is used as an optical standard for transmission calibration and measurement. The white plaque is placed at the front aperture plate. The sample to be measured is placed between the sphere opening and the sensor. The transmittance is determined within the range of 400 to 700 nm at the wavelength λₘₐₓ of the maximum transmittance peak for the sample. The light transmittance [%] of a sample is defined as 100 % x (transmittance value measured at λₘₐₓ in the presence of the layer structure)/(transmittance value measured at λₘₐₓ in the absence of the layer structure). The light transmission means the permeability for light emitted at a position facing the B-side of the sheet or layer and detected at a position facing the A-side surface of the sheet or layer. The light transmittance of the sheet refers to the whole sheet if all layers are translucent. The light transmittance of the sheet may be 1 % to 100 %, 1 % to 90 %, 1 % to 50%, or 5 to 50 %, preferably 1% to 30%, more preferably 2 to 20%. A low light transmittance such as 1 % to 50 % may be advantageous for hidden-until-lit applications. To enable a hidden-until-lit property of hiding the elements arranged under the cover layer when no light source is activated, the light transmittance of the sheet is preferably 1 to 50%, more preferably 1 to 30% at λₘₐₓ. In case a hidden-until-lit property is not desired, the light transmittance of the sheet may be 10 to 90%, preferably 20 to 80% at λₘₐₓ.

The sheet may contain additives such as UV stabilisers, pigments, heat stabilizers, flame retardants, processing aids (rheology modifiers, defoamers, levelling agents), compatibilizer agents. These additives may be contained in the cover layer, intermediate layer, and the optional lacquer layer. Pigments may be selected from carbon black, organic red, organic yellow, phthalocyanine blue, and titanium white, either used in waterborne and/or solvent based dispersions or thermoplastic masterbatches. If uniform color and high transparency of the sheet is desired, the pigments are preferably small to reduce light scattering. The particle size of the pigments is preferably less than 10 µm, more preferably less than 1 µm, even more preferably less than 100 nm. A heat stabilizer helps preserve the properties of a polymer at elevated temperatures. Various heat stabilizers like metallic salts (stabilize PVC), organometallic compounds, non-metallic organic stabilizers, organophosphites and epoxies can be used. Organophosphites protect polymers during the manufacturing process. Phenolic antioxidants protect the polymer during its usable life. Phenolic antioxidants are radical scavengers which prevent thermal degradation of polymers. Their effectiveness increases when used in combination with phosphites, thioethers and light stabilizers. Other examples of antioxidants are sterically hindered phenols such as butylated hydroxytoluene (2,6-di-tert-butyl-4-methylphenol, BHT), butylated hydroxyanisole (BHA), tertiarybutylhydroquinone (TBHQ) and gallates. In particular, halogenated polymers such as poly(vinyl chloride) (PVC) may require the use of heat stabilizers.

A UV stabiliser as an additive may achieve the object of maintaining the desired light transmittance after an exposure to UV radiation. UV radiation ranges between wavelengths of 280 and 400 nm. Polymers are sensitive to certain wavelengths of UV radiation. For instance, a UV sensitive polymer is aromatic polyurethane. Suitable UV stabilizers may be Ultraviolet Absorbers and Hindered Amine Light Stabilizers (HALS). Rutile titanium oxide is effective in the 300-400 nm range but is not very useful in the very short wavelength UVB range below 315. Hydroxybenzophenone and hydroxyphenylbenzotriazole have the advantage of being particularly suitable for transparent applications. Other UV absorbers include oxanilides for polyamides, benzophenones for PVC and benzotriazoles and hydroxyphenyltriazines. Hindered Amine Light Stabilizers (HALS) share the 2,2,6,6-tetramethylpiperidine ring structure. HALS are particularly effective in polyolefins and polyurethane. Any of these compounds may be combined. Some of these combinations have synergistic effect. For example, benzotriazoles are often combined with HALS.

In the present invention, the terms "comprises," "comprising," "including," and "having," are inclusive and therefore specify the presence of stated features, steps, layers and/or components, but do not preclude the presence or addition of one or more other features, steps, layers, components, and/or groups thereof. The method steps, processes, and operations described herein are not to be construed as necessarily requiring their performance in the particular order discussed or illustrated, unless specifically identified as an order of performance. It is also to be understood that additional steps may be employed.

Whenever it is mentioned in the context of this description that individual compositions or layers are based on a certain material, this should be interpreted as the respective material forming the main constituent of the composition or layer, wherein other constituents may also be present in small quantities. In embodiments, the term "based on" a certain material means a content of more than 50 mass%, preferably 90 mass%, and more preferably 95 mass%.

As used herein, the singular forms "a," "an," and "the" may be intended to include the plural forms as well, unless the context clearly indicates otherwise. For instance, components are generally described in the singular form, such as "a" component or "containing a" component. Such singular form formulations are meant to include more than one of the indicated component, unless indicated otherwise.

The term "and/or" includes any and all combinations of one or more of the associated listed items. Percentages (%) are percentages by mass (% by mass) unless explicitly indicated otherwise. The standards and norms mentioned refer to the latest version available at the time this application was filed, unless indicated otherwise.

In the present invention, the gel content is measured according to ASTM D2765-16 (except for placing the sample in xylene for 24 h instead of 12 h). A sample is weighed (initial weight) and placed in xylene for 24 hours at 180°C, the dissolved material is separated and the weight of the remaining material is determined (final weight); gel content [%] = [(final weight)/(initial weight)] x 100 %.

### Support layer

The support layer may have a thickness of 200 to 6000 µm, preferably 200 to 1200 µm, more preferably 800 to 1000 µm. The support layer is a textile layer. The support layer is preferably flexible and thin. Examples of a textile layer are knitted fabrics, woven textiles, non-woven textiles, glass fiber textiles, spunlace, or a spacer fabric. A knitted fabric is a flexible material made by creating an interlocking bundle of yarns or threads, which are produced by spinning raw fibers into long and twisted lengths. A textile is not compact and comprises a large volume ratio of hollow spaces that are usually filled with air. The density of the textile layer is preferably 50 to 300 kg/m³.

The textile layer of the support layer may contain or consist of one or more kinds of fibers selected from the group consisting of polyester, polypropylene, polyamide, cotton and natural fibers, or combinations thereof.

The support layer may be part of a structure consisting of several layers. For instance, the structure may comprise the textile support layer being bonded to the intermediate layer and having a thickness of 0.3 to 5 mm, a foam layer having a thickness of 0.5 to 10 mm and a density or preferably 30 to 300 kg/m³, and, optionally, a textile layer having a thickness of 0.3 to 2.5 mm in this order, wherein each of the textile layers is preferably directly bonded to the foam layer. The direct bonding excludes an additional layer or adhesive layer between the textile layer and foam layer. Hence, the sheet may contain several layers without containing any adhesive layer. The foam layer may have adhesive properties so that it can adhere firmly to an A-side or B-side textile without the addition of another adhesive.

In embodiments, an adhesive layer may be arranged between the textile layer and the foam layer and/or between the foam layer and the optional textile layer. The adhesive may be a polyolefinic adhesive, a polyurethane adhesive, an acrylic adhesive, or a hot melt adhesive based on polyurethane (PUR). The adhesive may be used in a thickness of 40 µm. The structure may contain the textile support layer, an adhesive layer, a foam layer, an adhesive layer, and a textile layer in this order.

The B-side of the support layer may contain additional layers, e.g., a foam layer or a layer of polyvinylchloride, and/or functional elements such as touch sensors. In the case of functional elements, the sheet may be translucent and the B-side of the cover layer or the B-side of the support layer may contain opaque areas.

### Intermediate layer

The intermediate layer contains polyurethane having a gel content of at least 20 % as component (A).

Component (A) may be obtained by curing a two-component polyurethane system, which may be a high-solid system. It may contain a diol polyurethane prepolymer and a chain extender, e.g., a diisocyanate. The prepolymer may be prepared from the raw materials mentioned below in relation to component (a) of the cover layer. Alternatively, the two-component polyurethane system may contain diisocyanate polyurethane prepolymers and diamines as crosslinkers. The raw materials are selected to meet the requirements of having a viscosity suitably high for achieving the desired low extent of interpenetration into the support layer and to yield the desired gel content in the cured polyurethane. To achieve the desired gel content, the system may be based on triols or triisocyanates to some extent. The two-component system may contain a polymerization catalyst which may remain in the final intermediate layer as component (B). The content of component (B) in the intermediate layer is preferably less than 1 mass%.

Alternatively, component (A) may be based on a one-component polyurethane system, which is a composition containing component (A) and water and/or solvent. The intermediate layer is obtained by drying the one-component system by removing the water and/or solvent. Residual water and/or solvent may be contained in the final intermediate layer as component (C). The content of component (C) in the intermediate layer is preferably less than 5 mass%, more preferably less than 1 mass%.

Component (A) may be based on a combination of one-component and a two-component polyurethane system.

The intermediate layer is a compact layer. Herein, a compact layer has a density of higher than 800 kg/m³ and preferably higher than 850 kg/m³. The intermediate layer preferably has a thickness of more than 20 µm to 300 µm.

The intermediate layer may contain a thermoplastic elastomer (TPE) and optionally a compatibilizer as described and in the amounts mentioned in relation to the cover layer below. Furthermore, the intermediate layer may contain usual additives such as plasticizers, stabilizers, anti-aging agent (e.g. antioxidants), fillers and pigments (silica, TiO₂, CaC0₃, Mg(OH)₂, carbon black, mica, kaolin, clay, coal dust, lignin, talc, BaSO₄, Al(OH)₃, ZnO, and MgO), flame retardants (e.g. antimony trioxide or zinc hydroxystannate), waxes, colorants, compatibilizers and other auxiliary substances (e.g. viscosity aids, adhesion promoters, etc.). Example of UV stabilisers are those mentioned above.

### Compound structure

The sheet contains a compound structure. The compound structure as such is not a layer but is defined by the interaction between the support layer and the intermediate layer. Preferably, this interaction is exclusively a physical interaction and excludes chemical interactions such as chemical bonds. The compound structure consists of a part of the support layer and a part of the intermediate layer interpenetrating each other. The extent of intermediate layer interpenetration is low, preferably 5 % to 50 %, more preferably 10 % to 20 %, and is defined as follows: Extent of interpenetration [%] = [(thickness of the compound structure)/(thickness of the intermediate layer)] x 100 %. The thickness of the intermediate layer is defined as the thickness of the thickness of the compound structure plus the thickness of the part of the intermediate layer not being part of the compound structure, i.e., plus the thickness of the intermediate layer above the compound structure. Similarly, the extent of support layer interpenetration is low, preferably 0.5 % to 10%, more preferably 0.5 % to 2 %, and is defined as follows: Extent of interpenetration [%] = [(thickness of the compound structure)/(thickness of the support layer)] x 100 %. The thickness of the support layer is defined as the thickness of the compound structure plus the thickness of the part of the support layer not being part of the compound structure, i.e., plus the thickness of the support layer below the compound structure.

The compound structure may be characterized by the structure of a cross-section of the sheet perpendicular to the layer plane, as observed with a microscope. In one embodiment, the reaction conditions, e.g., the viscosity of the intermediate layer raw material and the applied pressure, may be adjusted such that the density of the support layer is only slightly reduced in the lamination step. Preferably, no or almost no pressure is applied such that the support layer is not or almost not compressed during lamination. As a result, the part of support layer being part of the compound structure has at least 80 % of the area density of the support layer not being part of the compound structure. The density of the support layer may be adjusted such that the compound structure is composed of similar ratios of support layer and cover layer. The compound structure may consist of 30 to 70 % of the support layer material and 70 to 30 % of the cover layer material. The percentages may be determined on a weight basis or by simply determining the respective areas by microscopy of a cross-section of the sheet perpendicular to the layer plane. The process of lamination may be adjusted such that the hollow spaces (which are usually filled with gas such as air) in the textile layer of the support layer are (almost) completely filled with cover layer composition to obtain a compact compound structure.

### Cover layer

The cover layer contains thermoplastic polyurethane having a gel content of less than 10 % as component (a). The cover layer shows thermoplastic properties and has a thickness of preferably 100 µm to 600 µm, more preferably 50 µm to 300 µm. The cover layer is a compact layer or a hybrid layer (comprising a compact layer and a foamed layer). Preferably, the cover layer is compact. The cover layer may consist of one or more layers. Preferably, the cover layer consists of a single layer or two sublayers. In the case of two or more sublayers, the components recited herein may be contained in one or more or all sublayers. For instance, the aromatic component (a) may be contained only or at least in the upper sublayer of a cover layer consisting of two sublayers. The cover layer of the sheet may have a grain and/or may be coated with a lacquer layer.

The cover layer may contain usual additives such as those mentioned above in relation to the intermediate layer. The cover layer may be translucent. The optical properties of polymers are determined by their structure. Generally, amorphous polymers provide transparency while crystalline polymers provide opacity, particularly in thicker products such as injection molded end products. Crystallinity reduces the transparency by causing refraction and reflection of light and light scattering on the boundaries between the crystalline and amorphous regions. The light transmittance of semicrystalline polymers can be improved through additive technology. Crystalline structures are generally very ordered and are thus strong and rigid. On the other hand, amorphous polymers are characterized by a relatively low resistance to heat, toughness at low temperatures and low dimensional stability. Hence, it may be preferred that the polymers are not too amorphous and have a certain degree of crystallinity. In the present invention, the degree of crystallinity may be adjusted to achieve a desired balance of optical properties and other physical properties such as flexibility. In particular, the addition of rubber components may decrease the crystallinity.

The cover layer consists of or contains thermoplastic polyurethane (TPU) having a gel content of less than 10 %, preferably less than 5 % as the component (a) of the cover layer. The thermoplastic property requires that the overall degree of crosslinking is not too high. The gel content is preferably 0 % to 5 %. TPU is a thermoplastic elastomer comprising linear segmented block copolymers composed of hard and soft segments. A polyurethane is prepared from polyisocyanates such as diisocyanates and polyols such as diols. The polyol may be aliphatic or aromatic. An aliphatic group can be branched or unbranched and may have a carbon number of 1 to 10, in particular 1 to 6. It can be a methyl, ethyl, propyl, butyl, pentyl and/or hexyl group. The cycloaliphatic group can, for example, be based on a cyclopropyl, cyclobutyl, cyclopentyl, dicyclohexylmethane, cyclohexyl and/or isophorone group. The heterocyclic groups include the furfuryl group. The polyol may be a polymer with a molecular weight of 200 to 12,000, in particular 250 to 2,000. Examples are polyester polyols, polyether polyols, polythioether polyols, polycarbonate polyols and aliphatic polyacetals containing hydroxyl groups and aliphatic polycarbonates containing hydroxyl groups, or mixtures of at least two of these polyols. The TPU may contain groups derived from compounds containing reactive groups other than hydroxy groups, e.g., compounds having thiol groups or amine groups.

In one embodiment, the component (a) contains aromatic groups and is thus an aromatic TPU. For instance, the TPU may be prepared by using aromatic isocyanates such as toluene diisocyanate (TDI), diphenylmethane diisocyanate (MDI), and naphthalene diisocyanate (NDI). The content of aromatic groups in the TPU may be more than 3 mass% or even more than 5 mass%. Aromatic TPU has a high glass transition temperature and is rather brittle, whereas aliphatic TPU has a low glass transition temperature and is flexible. Hence, aromatic TPU renders the cover layer stiffer and thus less suitable for cut and sew applications. The use of TPS (thermoplastic styrenic elastomer) renders the cover layer more flexible and compensates the effect of aromatic TPU.

The cover layer may contain a thermoplastic elastomer (TPE) as component (b). A TPE is defined as an elastomer showing thermoplastic behaviour. The term "thermoplastic" denotes polymers or polymer compositions that show thermoplastic properties, in particular thermoreversibility. TPE behaves rubber-elastically in the range of usual service temperatures. TPE is a copolymer or an elastomer alloy, i.e., a physical mix of polymers that consists of materials with both thermoplastic and elastomeric properties. The desired properties can be obtained by varying the mixing ratios. Generally, there are the following generic classes of TPEs (designations according to ISO 18064): Styrenic block copolymer (TPS), thermoplastic polyolefin elastomer (TPO), thermoplastic vulcanizate (TPV), thermoplastic polyurethane (TPU), thermoplastic copolyester (TPC), melt processing rubbers, and thermoplastic polyamide (TPA). The TPE may belong to one generic class or may be a blend of TPEs from two or more classes. Also, the TPE may be selected from one class and may be one kind of TPE of one class or a blend of two or more kinds of TPEs of one class.

Preferably, component (b) is a thermoplastic styrenic elastomer (TPS). TPS does not contain urethane units and is thus different from component (a). TPS has soft elastomer and a hard thermoplastic component and may be a styrenic block copolymer and preferably styrenebutadiene-styrene block copolymer (SBS) or styrene-ethylene-butene-styrene block copolymer (SEBS), i.e., polystyrene-poly(ethylene/butylene)-polystyrene.

The content of TPE as the component (b) in the cover layer may be more than 20 %. The total content of thermoplastic polymers, e.g., TPU and TPE, in the cover layer is preferably at least 80 %, more preferably at least 90 %. Preferably, the total content of polymers in the cover layer consists of thermoplastic polymers and more preferably makes up at least 80 mass%, more preferably at least 90 mass% of the total mass of the cover layer.

The cover layer may contain a compatibilizer as the component (c). The compatibilizer enables or facilitates the preparation of a homogenous blend of components (a) and (b). In the case of TPS as component (b), component (c) is preferably a copolymer containing polyurethane blocks and styrenic polymer blocks, wherein the styrenic polymer blocks may be polymers of hydrogenated styrene-diene. The total of components (a) to (c) preferably makes up at least 90 mass% of the cover layer.

### Lacquer layer

The lacquer layer is an optional layer on the uppermost layer such as the cover layer of the sheet. The lacquer may be a conventional material. The thickness of the lacquer layer may preferably be 1 to 30 µm, more preferably 3 to 10 µm. The lacquer layer is applied directly on top of the uppermost layer as a finish and a protection against chemical agents, physical damage such as scratches or abrasion, and UV radiation. The lacquer layer can further reduce the surface adhesion. Conventional lacquers used for artificial leather for the interior of vehicles can be employed, such as a lacquer layer based on a silicone-containing aliphatic polyurethane. The lacquer layer usually consists of one or more, preferably up to four, transparent layers of lacquer. The lacquer layer is preferably elastic. The properties of the lacquer layer such as elasticity and translucence may be adjusted to correspond to the respective properties of the cover layer.

The lacquer layer may be an opaque layer or a translucent layer. Preferably, the lacquer layer is translucent and does not affect the translucency of the other layers of the sheet.

### Manufacturing method

The sheet according to the present invention may be prepared by a first method using a two-component polyurethane system as a raw material of component (A) or by a second method using a one-component system containing component (A) in water and/or solvent.

The first method comprises (i) a step of providing a layer of a two-component polyurethane system as a raw material of component (A), (ii) a step of applying the support layer thereon, and (iii) a step of curing to obtain the intermediate layer containing component (A). Alternatively, the first method comprises (i) a step of providing the support layer, (ii) a step of applying a layer of a two-component polyurethane system as a raw material of component (A) on the support layer, e.g., by knife coating, and then said step (iii).

The second method comprises (i) a step of providing a polyurethane layer of a composition containing component (A) and water and/or solvent and at least partly removing the water and/or solvent; (ii) a step of applying the support layer on the polyurethane layer, (iii) a step of removing remaining water and/or solvent to obtain the intermediate layer. Alternatively, the second method comprises (i) a step of providing the support layer, (ii) a step of applying the polyurethane layer on the support layer, and then said step (iii).

After steps (i) to (iii), each method continues with (iv) a step of applying molten cover layer raw material containing molten component (a) onto the intermediate layer, wherein the molten cover layer raw material is preferably prepared in an extruder, and (v) a step of solidifying the cover layer raw material to obtain the sheet.

In each of the first or the second method, step (ii) is carried out such that the molten cover layer raw material and the support layer only partly interpenetrate each other. To that end, the parameters such as the viscosity of the two-component or one-component polyurethane system are suitably adjusted. In a one-component system, the viscosity can be adjusted e.g. by varying the content of water and/or solvent. In a two-component system, the viscosity can be adjusted e.g. by varying the length of the prepolymers or using rheology modifying additives.

### Examples

The following Table 1 describes components of exemplary layers.

**Table 1**

| Layer | Main component | Secondary component |
|---|---|---|
| Lacquer (optional) | PU dispersions, solvent-base PU or a combination thereof (at least one layer) | |
| Additional cover layer - optional | 2K silicon resins | |
| Cover layer | Aromatic TPU (A-side) | Thermoplastic styrenic elastomer (SEBS) + compatibilizer (copolymer containing polyurethane blocks and styrenic polymer blocks) |
| Intermediate layer | PU high solids, PU dispersions, PU solvent based or a combination thereof | |
| Support layer | Material: polyester, polypropylene, polyamide, cotton or other natural fibers Structure: knitted fabrics, woven textiles, non-woven textiles, glass fiber textiles, spunlace, or a spacer fabric | |
| Additional layers or structures at the B-side of the support layer (optional) | Foam, spacer fabric, nonwovens (e.g. multiknit) | |

Sheets of Example 1 and References 1 and 2 were prepared. The sheet of Example 1 contained a support layer, a PU intermediate layer, and a cover layer according to the present invention. The sheet of Reference 1 contained a support layer, a PVC adhesive, a PVC foam layer, and a PVC compact layer. The sheet of Reference 2 contained a support layer, a PVC adhesive, a PVC intermediate layer, and a cover layer containing thermoplastic polyurethane.

The cover layer was prepared by using a TPU material having a gel content of 3.6 %, and the PU intermediate layer was prepared by using a combination of high-solid PU having a gel content of 32.7 % and a high-solid PU having a gel content of 64.9 %.

The difference between the sheet of Example 1 and the sheet of References 1 and 2 was the composition of the layer interposed between the support layer and the cover layer, i.e., the intermediate layer.

Table 2 shows the test results. Flexing tests were carried out after exposure to VDA oils.

**Table 2**

| | | Unit | Target Value | Example 1 | Ref. 1 | Ref. 2 |
|---|---|---|---|---|---|---|
| 100,000 flexing cycles at room temperature | lengthwise | Grade | 0 | 0 | | 3 |
| | transverse | | | 0 | | 1/3 |
| 10,000 flexing cycles at -10°C | lengthwise | | | 0 | 2 | |
| | transverse | | | 0 | 1/2 | |
| Seam strength | lengthwise | Newton | > 400 | 882 | 521 | |
| | transverse | | | 790 | 527 | |
| Total thickness | | mm | | 1,19 | 1,34 | 0,96 |
| Total weight | | g/m2 | | 817 | 890 | 759 |

## Claims

1. A sheet comprising a support layer, an intermediate layer containing polyurethane having a gel content of at least 20 %, and a cover layer containing thermoplastic polyurethane having a gel content of less than 10 %, wherein the support layer is a textile layer and the intermediate layer is a compact layer having a density of higher than 800 kg/m³, wherein the support layer and the intermediate layer only partly interpenetrate each other in their thickness direction to form a compound structure, wherein the thickness of the intermediate layer above the compound structure is at least 20 µm, wherein the gel content is measured according to ASTM D2765-16, except for placing the sample in xylene for 24 h instead of 12 h.

2. The sheet according to claim 1, wherein the intermediate layer has a thickness of more than 20 µm to 300 µm.

3. The sheet according to any of the preceding claims, wherein the support layer is a textile layer having a thickness of 200 to 1200 µm, the intermediate layer has a thickness of more than 50 µm to 300 µm, and the cover layer has a thickness of 100 to 600 µm.

4. The sheet according to any of the preceding claims, wherein the support layer has a thickness of at least 800 µm and the compound structure has a thickness of less than 40 µm.

5. The sheet according to any of the preceding claims, which does not contain polyvinylchloride and does not contain a plasticizer.

6. The sheet according to any of the preceding claims, wherein the cover layer contains a thermoplastic styrenic elastomer.

7. The sheet according to any of the preceding claims, wherein the intermediate layer and the cover layer are directly bonded to each other or at least one additional layer is arranged between the intermediate layer and the cover layer.

8. The sheet according to any of the preceding claims, wherein the polyurethane in the cover layer is aromatic.

9. The sheet according to any of the preceding claims, wherein the cover layer contains a lower sublayer and an upper sublayer, wherein the lower sublayer is directly bonded to the intermediate layer and has a hardness Shore A according to DIN 53505 of at most 70, and the upper layer has a hardness Shore A according to DIN 53505 of at least 75.

10. The sheet according to claim 9, wherein the lower sublayer and the upper sublayer differ in their hardness Shore A according to DIN 53505 by at least 10.

11. A method of preparing a sheet according to any of claims 1 to 10, comprising
(i) a step of providing a two-component polyurethane system, (ii) a step of providing a layered structure composed of the support layer and a layer of the two-composition polyurethane system, (iii) a step of curing to obtain the support layer coated with the intermediate layer containing polyurethane having a gel content of at least 20 %; or
(i) a step of providing a polyurethane layer of a polyurethane composition based on water and/or solvent and containing polyurethane having a gel content of at least 20 %, and at least partly removing the water and/or solvent; (ii) a step of providing a layered structure composed of the support layer and the polyurethane layer, (iii) a step of removing remaining water and/or solvent to obtain the intermediate layer;
and, after either set of steps (i) to (iii) above, (iv) a step of applying molten cover layer raw material containing polyurethane having a gel content of less than 10 % onto the intermediate layer, and (v) a step of solidifying the cover layer raw material to obtain the sheet.

12. A sewn product obtainable by sewing the sheet according to any of claims 1 to 10 or a wrapped product obtainable by using the sheet according to any of claims 1 to 10 in a process of edge wrapping a substrate.

13. The use of a sheet according to any of claims 1 to 10 as an artificial leather.

14. The use of a sheet according to any of claims 1 to 10 or the sewn product or wrapped product according to claim 12 as a cover material in the interior of a vehicle.

## Patentansprüche

1. Folie, die eine Trägerfolie, eine Zwischenschicht, die Polyurethan mit einem Gelgehalt von mindestens 20% enthält, und eine Deckschicht, die thermoplastisches Polyurethan mit einem Gelgehalt von weniger als 10% enthält, aufweist, wobei die Trägerfolie eine Textilschicht ist und die Zwischenschicht eine kompakte Schicht mit einer Dichte von mehr als 800 kg/m³ ist, wobei die Trägerfolie und die Zwischenschicht sich nur teilweise in ihrer Dickenrichtung zur Ausbildung einer Verbundstruktur durchdringen, wobei die Dicke der Zwischenschicht oberhalb der Verbundstruktur mindestens 20 µm beträgt, wobei der Gelgehalt gemäß ASTM D2765-16 gemessen wird, mit der Ausnahme, dass die Probe 24 h anstatt 12 h in Xylol eingelegt wird.

2. Folie nach Anspruch 1, wobei die Zwischenschicht eine Dicke von mehr als 20 µm bis 300 µm aufweist.

3. Folie nach einem der vorhergehenden Ansprüche, wobei die Trägerfolie eine Textilschicht mit einer Dicke von 200 bis 1200 µm ist, die Zwischenschicht eine Dicke von mehr als 50 µm bis 300 µm aufweist und die Deckschicht eine Dicke von 100 bis 600 µm aufweist.

4. Folie nach einem der vorhergehenden Ansprüche, wobei die Trägerfolie eine Dicke von mindestens 800 µm aufweist und die Verbundstruktur eine Dicke von weniger als 40 µm aufweist.

5. Folie nach einem der vorhergehenden Ansprüche, die kein Polyvinylchlorid und keinen Weichmacher enthält.

6. Folie nach einem der vorhergehenden Ansprüche, wobei die Deckschicht ein thermoplastisches styrenisches Elastomer enthält.

7. Folie nach einem der vorhergehenden Ansprüche, wobei die Zwischenschicht und die Deckschicht direkt miteinander verbunden sind oder mindestens eine zusätzliche Schicht zwischen der Zwischenschicht und der Deckschicht angeordnet ist.

8. Folie nach einem der vorhergehenden Ansprüche, wobei das Polyurethan in der Deckschicht aromatisch ist.

9. Folie nach einem der vorhergehenden Ansprüche, wobei die Deckschicht eine untere Teilschicht und eine obere Teilschicht enthält, wobei die untere Teilschicht direkt mit der Zwischenschicht verbunden ist und eine Härte Shore A gemäß DIN 53505 von höchstens 70 aufweist, und die obere Schicht eine Härte Shore A gemäß DIN 53505 von mindestens 75 aufweist.

10. Folie nach Anspruch 9, wobei sich die untere Teilschicht und die obere Teilschicht in ihrer Härte Shore A gemäß DIN 53505 um mindestens 10 unterscheiden.

11. Verfahren zur Herstellung einer Folie nach einem der Ansprüche 1 bis 10, umfassend
(i) einen Schritt des Bereitstellens eines Zweikomponenten-Polyurethansystems, (ii) einen Schritt des Bereitstellens einer Schichtstruktur, die aus der Trägerfolie und einer Schicht des Zweikomponenten-Polyurethansystems besteht, (iii) einen Schritt des Aushärtens, um die mit der Zwischenschicht beschichtete Trägerfolie zu erhalten, wobei die Zwischenschicht Polyurethan mit einem Gelgehalt von mindestens 20% enthält; oder
(i) einen Schritt des Bereitstellens einer Polyurethanschicht aus einer Polyurethankomposition auf Wasser- und/oder Lösungsmittelbasis, die Polyurethan mit einem Gelgehalt von mindestens 20% enthält, und zumindest teilweises Entfernen des Wassers und/oder Lösungsmittels; (ii) einen Schritt des Bereitstellens einer Schichtstruktur, die aus der Trägerfolie und der Polyurethanschicht besteht, (iii) einen Schritt des Entfernens des verbleibenden Wassers und/oder Lösungsmittels, um die Zwischenschicht zu erhalten;
und nach einer der beiden Schrittfolgen (i) bis (iii) oben, (iv) einen Schritt des Aufbringens eines geschmolzenen Deckschicht-Rohmaterials, das Polyurethan mit einem Gelgehalt von weniger als 10% enthält, auf die Zwischenschicht, und (v) einen Schritt des Verfestigens des Deckschicht-Rohmaterials, um die Folie zu erhalten.

12. Genähtes Produkt, erhältlich durch Nähen der Folie nach einem der Ansprüche 1 bis 10, oder ein umwickeltes Produkt, erhältlich durch Verwendung der Folie nach einem der Ansprüche 1 bis 10 in einem Verfahren zum Kantenumwickeln eines Substrats.

13. Verwendung einer Folie nach einem der Ansprüche 1 bis 10 als Kunstleder.

14. Verwendung einer Folie nach einem der Ansprüche 1 bis 10 oder des genähten Produkts oder umwickelten Produkts nach Anspruch 12 als Bezugsmaterial im Innenraum eines Fahrzeugs.

## Revendications

1. Feuille comprenant une couche de support, une couche intermédiaire contenant du polyuréthane ayant une teneur en gel d'au moins 20 % et une couche de recouvrement contenant du polyuréthane thermoplastique ayant une teneur en gel inférieure à 10 %, dans laquelle la couche de support est une couche textile et la couche intermédiaire est une couche compacte ayant une densité supérieure à 800 kg/m³, dans laquelle la couche de support et la couche intermédiaire ne s'interpénètrent que partiellement l'une dans l'autre dans leur direction d'épaisseur afin de former une structure composite, dans laquelle l'épaisseur de la couche intermédiaire au-dessus de la structure composite est d'au moins 20 µm, dans laquelle la teneur en gel est mesurée selon la norme ASTM D2765-16, à l'exception du placement de l'échantillon dans le xylène pendant 24 h au lieu de 12 h.

2. Feuille selon la revendication 1, dans laquelle la couche intermédiaire a une épaisseur de plus de 20 µm à 300 µm.

3. Feuille selon l'une quelconque des revendications précédentes, dans laquelle la couche de support est une couche textile ayant une épaisseur de 200 à 1 200 µm, la couche intermédiaire a une épaisseur de plus de 50 µm à 300 µm, et la couche de recouvrement a une épaisseur de 100 à 600 µm.

4. Feuille selon l'une quelconque des revendications précédentes, dans laquelle la couche de support a une épaisseur d'au moins 800 µm et la structure composite a une épaisseur inférieure à 40 µm.

5. Feuille selon l'une quelconque des revendications précédentes, qui ne contient pas de polychlorure de vinyle et ne contient pas de plastifiant.

6. Feuille selon l'une quelconque des revendications précédentes, dans laquelle la couche de recouvrement contient un élastomère styrénique thermoplastique.

7. Feuille selon l'une quelconque des revendications précédentes, dans laquelle la couche intermédiaire et la couche de recouvrement sont directement liées l'une à l'autre ou au moins une couche supplémentaire est agencée entre la couche intermédiaire et la couche de recouvrement.

8. Feuille selon l'une quelconque des revendications précédentes, dans laquelle le polyuréthane dans la couche de recouvrement est aromatique.

9. Feuille selon l'une quelconque des revendications précédentes, dans laquelle la couche de recouvrement contient une sous-couche inférieure et une sous-couche supérieure dans laquelle la sous-couche inférieure est directement liée à la couche intermédiaire et a une dureté Shore A selon la norme DIN 53505 d'au plus 70, et la couche supérieure a une dureté Shore A selon la norme DIN 53505 d'au moins 75.

10. Feuille selon la revendication 9, dans laquelle la sous-couche inférieure et la sous-couche supérieure diffèrent en termes de dureté Shore A selon la norme DIN 53505 d'au moins 10.

11. Procédé destiné à préparer une feuille selon l'une quelconque des revendications 1 à 10, comprenant
(i) une étape de fourniture d'un système de polyuréthane à deux composants, (ii) une étape de fourniture d'une structure en couches composée de la couche de support et d'une couche du système de polyuréthane à deux composants, (iii) une étape de durcissement pour obtenir la couche de support revêtue de la couche intermédiaire contenant du polyuréthane ayant une teneur en gel d'au moins 20 % ; ou
(i) une étape de fourniture d'une couche de polyuréthane d'une composition de polyuréthane à base d'eau et/ou de solvant et contenant du polyuréthane ayant une teneur en gel d'au moins 20 %, et d'élimination au moins partiellement de l'eau et/ou du solvant ; (ii) une étape de fourniture d'une structure en couches composée de la couche de support et de la couche de polyuréthane, (iii) une étape d'élimination de l'eau et/ou du solvant résiduels pour obtenir la couche intermédiaire ;
et, après l'une ou l'autre série d'étapes (i) à (iii) ci-dessus, (iv) une étape d'application d'une matière première de couche de recouvrement fondue contenant du polyuréthane ayant une teneur en gel inférieure à 10 % sur la couche intermédiaire, et (v) une étape de solidification de la matière première de couche de recouvrement pour obtenir la feuille.

12. Produit cousu pouvant être obtenu en cousant la feuille selon l'une quelconque des revendications 1 à 10 ou produit enveloppé pouvant être obtenu en utilisant la feuille selon l'une quelconque des revendications 1 à 10 dans un procédé d'emballage de bords d'un substrat.

13. Utilisation d'une feuille selon l'une quelconque des revendications 1 à 10 comme cuir artificiel.

14. Utilisation d'une feuille selon l'une quelconque des revendications 1 à 10 ou du produit cousu ou emballé selon la revendication 12 comme matériau de recouvrement à l'intérieur d'un véhicule.
